Europäisches Patentamt

European Patent Office

Office européen des brevets

(11) Numéro de publication: **0 176 423**
**A1**

(12) **DEMANDE DE BREVET EUROPEEN**

(21) Numéro de dépôt: **85401755.5**

(22) Date de dépôt: **10.09.85**

(51) Int. Cl.⁴: **B 60 N 1/00**
B 60 N 3/02, A 47 C 9/06
B 61 D 33/00

(30) Priorité: **10.09.84 FR 8413876**

(43) Date de publication de la demande:
**02.04.86 Bulletin 86/14**

(84) Etats contractants désignés:
**BE DE IT LU**

(71) Demandeur: **Vianello, Gianni**
**37, rue de la Chaussée d'Antin**
**F-75009 Paris(FR)**

(72) Inventeur: **Vianello, Gianni**
**37, rue de la Chaussée d'Antin**
**F-75009 Paris(FR)**

(74) Mandataire: **Hasenrader, Hubert et al,**
**Cabinet BEAU DE LOMENIE 55, rue d'Amsterdam**
**F-75008 Paris(FR)**

(54) **Appui ischiatique.**

(57) Il est prévu un support (6), un corps (4) d'allure générale sensiblement plane, et un mécanisme de manoeuvre de telle sorte que le corps puisse prendre, au gré d'un utilisateur, une position de repli (1) sensiblement verticale et une position d'appui ischiatique (1a) sensiblement inclinée vers l'avant et vers le bas et pouvant supporter la charge d'un utilisateur.

Fig-1

EP 0 176 423 A1

Croydon Printing Company Ltd.

**Appui ischiatique.**

L'invention concerne des appuis destinés notamment aux utilisateurs des moyens de transport en commun tels que métro, autobus, etc.

Ces moyens de transport comportent généralement d'une part des sièges permanents et des sièges amovibles du type strapontin pour les personnes assises, et des poignées de diverses sortes pour les personnes debout (poignées suspendues en hauteur, barres verticales, barres horizontales à hauteur de ceinture, etc.).

L'invention a pour but de proposer un nouveau type d'appui qui présente, concurremment ou en complément aux dispositifs précités, de nouveaux avantages inconnus jusque là.

L'appui de l'invention comporte essentiellement un support, un corps d'allure générale sensiblement plane, et un mécanisme de manoeuvre reliant le corps au support de telle sorte que le corps puisse prendre, au gré d'un utilisateur, une position de repli sensiblement verticale et une position d'appui ischiatique sensiblement inclinée vers l'avant et vers le bas et pouvant supporter la charge d'un utilisateur.

Ainsi dans sa première position, il s'éclipse sensiblement, prenant peu de place au sol (un peu comme un strapontin). De plus, il est conçu de manière à servir de main courante sensiblement à hauteur de ceinture pour une personne debout.

Dans sa seconde position, il est apte à décharger le poids d'un corps assis en position ischiatique et pointé avec les jambes au sol pour garder l'équilibre. Même dans cette position, du fait qu'il est incliné, il ne prend pas beaucoup de place et la personne appuyée non plus (nettement moins de place qu'une personne assise sur un strapontin).

Avantageusement, le support est en porte-à-faux et fixé à une paroi verticale du moyen de transport.

Avantageusement, le mécanisme de manoeuvre est un dispositif de guidage courbe.

Avantageusement, le mécanisme de guidage comporte des galets de roulement et un chemin de roulage.

Avantageusement, le mécanisme de guidage comporte un chariot fixé sur le support et muni de galets de roulement et une glissière courbe formant chemin de roulage.

Avantageusement, la glissière courbe est logée à l'intérieur du corps. A cet effet, il est avantageux que le corps forme une légère concavité.

Avantageusement, il est prévu des profils de stabilité latérale pendant le guidage le long de la glissière courbe.

Avantageusement, l'appui comporte des moyens de rappel du corps dans sa position de repli.

D'autres caractéristiques et avantages de l'invention ressortiront de la description suivante d'un mode de réalisation et d'une variante. Il sera fait référence aux dessins sur lesquels:

- la figure 1 représente en perspective plusieurs appuis ischiatiques contigus.

- la figure 2 est une vue de côté d'un appui ischiatique utilisé par un individu en position debout.

- la figure 3 est une vue de côté schématique du même appui utilisé par un individu en position appuyée.

- la figure 4 est une perspective arrière d'un appui conforme à l'invention avec arrachement partiel laissant voir une première variante du mécanisme de guidage.

- la figure 5 est une coupe transversale V-V de l'appui de la figure 4.

- la figure 5 A montre une seconde variante du détail A du mécanisme de guidage de la figure 5.

- la figure 6 est une coupe latérale de l'appui montrant la glissière de guidage.

Les appuis ischiatiques 1,1a,1b,1c,etc. sont destinés à être disposés en rangées d'appuis individuels contigus. Chaque appui peut être manoeuvré individuellement par son utilisateur.

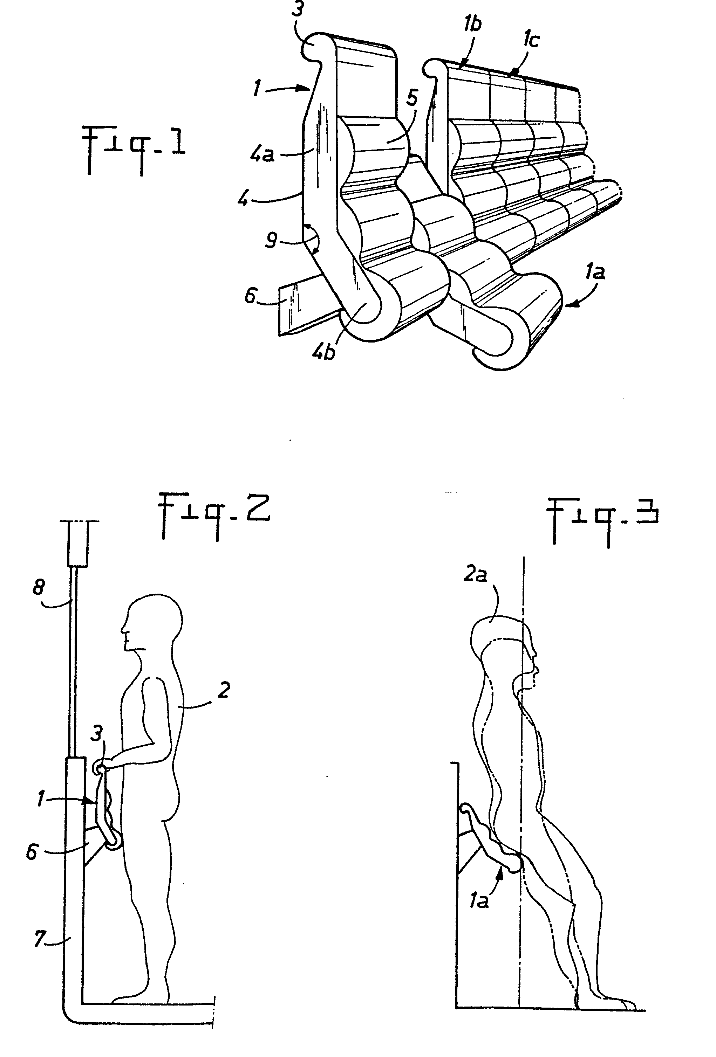

La figure 1 montre les appuis 1, 1b et 1c en position de

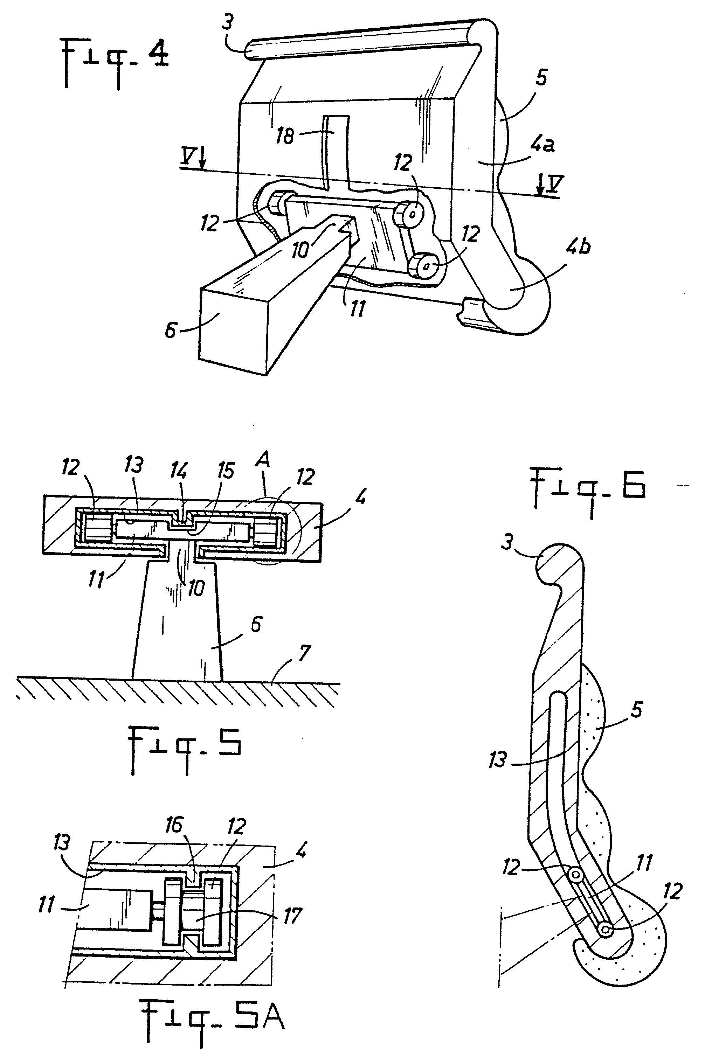

repli vertical. Cette position est la position d'équilibre normal de l'appui quand il n'est pas utilisé, et où son encombrement est minimum. C'est aussi la position d'utilisation par un individu debout. Normalement l'individu 2 (cf. fig.2) est tourné vers l'appui 1 et peut poser ses mains sur la partie supérieure 3 de l'appui, conformée en main courante horizontale, et disposée à une hauteur conforme à la morphologie moyenne des utilisateurs envisagés.

L'appui 1a des figures 1 et 3 est au contraire en position inclinée. Cette position est réservée à l'appui ischiatique proprement dit : l'individu 2a s'appuie partiellement sur l'appui incliné 1a, la région ischiatique de son corps reposant sur la partie rembourrée de l'appui 1a, et ses jambes étant dans une position plus ou moins relâchée.

L'appui 1 va maintenant être décrit plus en détail.

Il comporte d'une part un corps rigide 4 d'allure générale sensiblement plane, recouvert à l'avant au moins partiellement par un rembourrage 5, et d'autre part un support 6 (ici par exemple un support mural destiné à être fixé à la cloison basse 7 surmontée d'un vitrage 8 d'un véhicule de transport en commun) et un mécanisme de manoeuvre interposé entre le support 6 et le corps 4 pour permettre à celui-ci de prendre à la volonté de l'utilisateur sa position de repli, sensiblement verticale, ou sa position d'appui, inclinée vers l'avant et vers le bas.

Bien qu'il soit d'allure générale sensiblement plane, il est préférable que le corps 4 présente vers l'avant une certaine concavité, avantageuse tant pour le confort de l'appui ischiatique que pour la réalisation simple du mécanisme de manoeuvre.

Cette concavité est réalisée dans l'exemple illustré sur les dessins par le fait que le corps 4 se compose d'une partie haute 4a principale plane et d'une partie basse 4b plus petite, également plane mais formant vers l'avant un angle obtus 9 (par exemple environ 150°) avec la partie haute.

Dans le mode de réalisation illustré sur les dessins, le corps 4 est en partie creux de manière à abriter le mécanisme de manoeuvre.

Ce mécanisme consiste ici essentiellement en un dispositif de guidage, mais il va sans dire qu'on peut aussi concevoir d'autres types de mécanismes tels que des mécanismes à bras articulés ou autres. Toutefois, un dispositif de guidage courbe est particulièrement avantageux, tant sur le plan de la robustesse et de la simplicité constructive, que sur celui du mouvement entre les positions extrêmes, qui peut se faire alors dans un minimum d'espace et donc entraîner un encombrement minimum.

Le support en porte-à-faux 6 comporte à son extrêmité opposée à la paroi 7 une partie amincie 10 dans laquelle s'encastre perpendiculairement un chariot fixe 11 muni de quatre galets de roulement 12 montés fous.

Le chariot 11 est d'épaisseur inférieure au diamètre des galets 12. Le corps 4 peut coulisser sur le chariot 11 grâce à une glissière interne 13 qui sert de chemin de roulement aux galets 12 et doit donc avoir une épaisseur au moins légèrement supérieure au diamètre des galets, au moins dans la région du roulage (ce léger jeu n'a pas été représenté sur les figures 5 et 6).

Le profil général de la glissière est légèrement courbe de manière à permettre l'inclinaison du corps au cours de son guidage. La longueur de la glissière correspond à la longueur relativement modeste du déplacement du corps pour passer d'une position de repli à une position d'appui et vice-versa (ce déplacement s'analysant sensiblement comme une rotation dont le centre est le centre de courbure de la glissière, situé assez largement à l'avant de l'appui). La glissière courbe prend donc avantageusement place dans le corps 4 au niveau de sa concavité, c'est-à-dire dans la zone de part et d'autre de l'angle 9, comme le montre la figure 6. Il est par exemple facile, sans exagérer l'épaisseur du corps 4, d'y loger une glissière formant un arc d'environ 30$^{\circ}$ supplémentaire de l'angle 9 de 150$^{\circ}$. Il s'ensuit qu'en position ischiatique, la partie 4b est inclinée sensiblement à 60$^{\circ}$ par rapport à la verticale ce qui assure un bon report de la charge du corps.

Selon le degré de rusticité choisi pour le mécanisme, le guidage pourra se faire avec jeu par les galets 12 adoptant, selon les forces en présence, l'une ou l'autre des faces de roulage de la glissière. On peut aussi leur imposer en permanence une face de roulage en prévoyant des galets supplémentaires roulant sur l'autre face.

La stabilité latérale peut être obtenue par des galets latéraux supplémentaires roulants sur les côtés de la glissière ou plus simplement par le glissement relatif de deux profils complémentaires prévus respectivement sur la glissière 13 et le chariot 11 (profils 14,15 de la figure 5) ou sur la glissière 13 et les galets 12 (profils 16 et 17 de la figure 5A). On utilise avantageusement des matériaux à faible coefficient de frottement pour réaliser ces profils.

L'arrière du corps 4 comporte une fente longitudinale 18 destinée au passage de la partie amincie 10 du support 6 pendant le déplacement du corps.

Le mécanisme de guidage est complété par un dispositif de rappel destiné à donner à l'appui 1 sa position de repli comme position d'équilibre. Il peut s'agir par exemple d'un ressort de traction (non représenté) reliant le chariot 11 à la partie inférieure de la glissière, ou d'un système classique de contrepoids.

La force de rappel du dispositif est réglée de manière à offrir une résistance suffisante aux sollicitations verticales et dirigées vers le bas d'une main d'un utilisateur posée sur la main courante 3 pour se tenir en position debout (ces sollicitations verticales sont en principe assez faibles, l'utilisateur recherchant surtout la stabilité latérale lors des accélérations ou décélérations du véhicule), et à permettre malgré tout à l'utilisateur de vaincre cette résistance pour mettre l'appui en position ischiatique.

On peut prévoir un dispositif de sécurité verrouillant normalement l'appui en position de repli, et pouvant être

0176423

déverrouillé par l'utilisateur désirant passer en position ischiatique.

Ainsi l'appui conforme à l'invention passe très facilement d'une position de repli à sa position de travail, en confinant l'ensemble de ses positions intermédiaires dans un volume spatial très réduit (au contraire des strapontins pivotants qui balayent dans leurs positions intermédiaires un espace très considérable comparé à leur volume propre). Par ailleurs, le déplacement en hauteur de l'appui est relativement faible, puisqu'il s'agit seulement de passer de la position de repli où l'appui est sensiblement à hauteur de l'ischion de l'utilisateur debout à la position inclinée où l'appui est nécessairement à hauteur des ischions de l'utilisateur en position ischiatique.

0176423

REVENDICATIONS

1. Appui ischiatique caractérisé en ce qu'il comporte un support (6), un corps (4) d'allure générale sensiblement plane, et un mécanisme de manoeuvre (11-17) reliant le corps (4) au support (6) de telle sorte que le corps puisse prendre, au gré d'un utilisateur, une position de repli sensiblement verticale et une position d'appui ischiatique sensiblement inclinée vers l'avant et vers le bas et pouvant supporter la charge d'un utilisateur.

2. Appui selon la revendication 1, caractérisé en ce que le support (6) est en porte-à-faux.

3. Appui selon l'une quelconque des revendictions 1 ou 2, caractérisé en ce que le mécanisme de manoeuvre (11-17) est un dispositif de guidage courbe.

4. Appui selon la revendication 3, caractérisé en ce que le mécanisme de guidage comporte des galets de roulement (12) et un chemin de roulage (13).

5. Appui selon la revendication 3, caractérisé en ce que le mécanisme de guidage comporte un chariot (11) fixé sur le support (6) et muni de galets de roulement (12) et une glissière courbe (13) formant chemin de roulage.

6. Appui selon la revendication 5, caractérisé en ce que la glissière courbe est logée à l'intérieur du corps (4).

7. Appui selon la revendication 6, caractérisé en ce que le corps (4) forme une légère concavité.

8. Appui selon l'une quelconque des revendications 5 à 7, caractérisé en ce qu'il est prévu des profils (13-17) de stabilité latérale.

9. Appui selon l'une quelconque des revendications 1 à 8, caractérisé en ce qu'il comporte des moyens de rappel du corps dans sa position de repli.

10. Appui selon l'une quelconque des revendications 1 à 9, caractérisé en ce que la partie supérieure du corps (4) forme main courante (3).

Fig.1

Fig.2

Fig.3

Fig. 4

Fig. 5

Fig. 5A

Fig. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | FR-A-2 310 727 (RENAULT) <br> * Page 4, lignes 1-14; figures * | 1 | B 60 N 1/00 <br> B 60 N 3/02 <br> A 47 C 9/06 <br> B 61 D 33/00 |
| A | EP-A-0 018 812 (MENGSHOEL) | | |
| A | DE-A-2 548 217 (CHRISTIAN) | | |
| A | DE-C- 269 577 (KLEIN) | | |
| A | US-A-3 762 764 (McJUNKIN) | | |
| A | FR-A-2 120 503 (SAVIEM) | | |

DOMAINES TECHNIQUES RECHERCHES (Int. Cl.4)

A 47 C 7/00
A 47 C 9/00
A 47 C 13/00
B 60 N 1/00
B 60 N 3/00
B 61 D 1/00
B 61 D 33/00

Le présent rapport de recherche a été établi pour toutes les revendications

| Lieu de la recherche <br> LA HAYE | Date d achèvement de la recherche <br> 13-12-1985 | Examinateur <br> HORVATH R.C. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82